# EUROPEAN PATENT SPECIFICATION

(11) **EP 1 384 603 B1**
(45) Date of publication and mention of the grant of the patent: **16.11.2005**
(21) Application number: 03102182.7
(22) Date of filing: 16.07.2003
(51) Int. Cl.: B60C 23/04

(54) **Annular antenna and transponder apparatus and method of disposition in pneumatic tires**
Ringförmige Antenne, Transpondereinheit und Methode der Bereitstellung in Reifen
Antenne de forme annulaire et appareil d' un transpondeur et méthod de disposition dans un pneu

(30) Priority: 24.07.2002 US 398066; 24.07.2002 US 398308
(43) Date of publication of application: 28.01.2004
(73) Proprietor: THE GOODYEAR TIRE & RUBBER COMPANY, Akron, Ohio 44316-0001 (US)
(72) Inventor: Benedict, Robert Leon, Tallmadge, OH 44278 (US); Hillenmayer, Franz Josef, 93133 Burglengenfeld (DE); Logan, Brian Matthew, Akron, OH 44302 (US); Parsons, Anthony William, L-1466 Dommeldange (LU); Schneider, Christian Johann Karl Josef, 93138 Lappersdorf (DE); Tubb, Gary Edwin, Copley, OH 44321 (US); Johnson, David Allan, Thornton, CO 80241 (US); Letkomiller, Joseph Michael, Thornton, Colorado 80602 (US); Pollack, Richard Stephen, Boulder, CO 80302 (US)
(74) Representative: Kutsch, Bernd

(56) References cited:
- EP-A- 1 310 386
- WO-A-90/12474
- WO-A-99/29525
- US-A- 4 319 220
- US-A- 5 541 574
- PATENT ABSTRACTS OF JAPAN vol. 013, no. 143 (M-811), 7 April 1989 (1989-04-07) & JP 63 306905 A (SUMITOMO ELECTRIC IND LTD), 14 December 1988 (1988-12-14)

## Description

### Field of the Invention

The invention relates to the assembly and disposition of an annular apparatus, including an antenna and a transponder, in a tire for the purpose of transmitting tire or wheel data and, more specifically, to the method of assembly and location of the annular apparatus relative to the tire or wheel in order to optimize competing performance criteria. It also relates to the coupling of electronic devices such as a transponder and antenna and, more specifically, to direct magnetic coupling of a transponder and annular antenna for use in pneumatic tires.

### Background of the Invention

This invention relates to an annular apparatus, including an antenna, for electronically transmitting tire or wheel identification or other data at radio frequency. It is common to employ annular apparatus, including an antenna, for electronically transmitting tire or wheel identification or other data at radio frequency. The apparatus includes a radio-frequency transponder comprising an integrated circuit chip having data capacity at least sufficient to retain identification information for the tire or wheel. Other data, such as the inflation pressure of the tire or the temperature of the tire or wheel at the transponder location, can be transmitted by the transponder along with the identification data. While the subject invention is specifically directed to the coupling of a transponder to an antenna for use in pneumatic tires, the invention is not so restricted. The principles herein described may find application in the magnetic coupling of a range of electronic devices to an annular antenna for myriad other applications that will be apparent to those in the art.

As is evidenced by the references described below incorporated herein by reference, it is known in the art to employ an annular antenna to transmit, at radio frequencies, data from a transponder contained within the structure of a tire or tire and wheel assembly. The antenna and transponder may be incorporated into a tire during "pre-cure" manufacture. In practice, however, it is very difficult to do this. Both radial ply and bias ply tires undergo a substantial diametric enlargement during the course of manufacture. Bias ply tires are expanded diametrically when inserted into a curing press, which typically has a bladder that forces the green tire into the toroidal shape of the mold enclosing it. Radial ply tires undergo diametric expansion during the tire building or shaping process and a further diametric expansion during the course of curing. Any annular antenna and the electronic circuitry associated therewith built into the tire must be able to maintain structural integrity and the mechanical connection between the antenna and transponder package during the diametric enlargement of the tire during its manufacture. Furthermore, the annular antenna must be able to survive the repeated deformations occurring during tire use and the rigors imparted by testing procedures to which tires are subjected before retreading. Accordingly, a need exists for an annular apparatus and method sufficient to maintain mechanical and structural integrity in the transponder-antenna loop connection during the diametric enlargement of the tire during the building and curing process. In addition, the antenna and the transponder-antenna loop connection must be durable and able to maintain structural integrity throughout the rigors of tire operation and retreading procedures without degradation in performance or malfunction due to breakage of wire or electrical connections.

Once assembled into the tire, any detected malfunction in the antenna, transponder, or antenna to transponder connection that cannot be repaired destroys the utility of the tire and may necessitate a scrapping of the tire. Hence, placement of an annular antenna-transponder assembly into a tire during its manufacture carries risk that subsequent failure or breakage of assembly components will necessitate the destruction of the otherwise suitable host tire.

Not only is the risk of damage to an annular antenna-transponder system present during its incorporation into a tire during manufacture, but damage to such systems are not uncommon from operation of the tire on a vehicle. Loop antennas in known tire pressure monitoring systems have heretofore been placed into the tire during the curing process either at the crown of the tire, the bead of the tire, or the sidewall. Antennas and transponders located in the crown are subjected to substantial compressive strain and at the sidewall a high strain amplitude. Such locations represent high load and deformation regions of the tire. Consequently, antenna, transponders, and the connections therebetween in such locations are prone to breakage and mechanical or electrical failure.

Beyond the need to maintain mechanical structural integrity as discussed above, it is important that the connection between the antenna and the transponder provide a high energy transfer. Passive transponders require that energy be supplied from a remote (non-contact) source of energy. This energy coupling is commonly achieved by generating a LF (for example 125kHz to 135 kHz) alternating current in a reader antenna coil. The reader coil is typically, but not necessarily, a series resonant Inductive-Capacitive (LC) circuit. The current in the reader antenna coil creates a nearby magnetic field. A passive transponder within this field captures energy by inductive coupling between the magnetic field and the transponder antenna coil, which is typically, but not necessarily, incorporated into a parallel tuned resonant LC circuit.

One form of transponder antenna coil is a large diameter wire loop of one or a very few turns. Such an antenna is very useful in a tire, for example, where the loop can be deployed in the tire crown or sidewall to provide a continuous coupling through 360 degrees of rotation. A large loop of one or a few turns offers a large area to capture energy from the field of the reader antenna coil, but has very low inductance. A poor quality resonant LC circuit and poor impedance matching to the transponder electronics results. To overcome poor impedance matching, a transformer may be employed, consisting of a low number of primary turns in series with the loop antenna and a high number of secondary turns connected to the input of the transponder electronics. The transformer provides a higher inductance on the primary side and therefore enables a high quality tuned LC circuit, a high voltage level at the transponder input, and good impedance matching to the transponder electronics. The most efficient means of creating such a transformer is by using a ferrite material, typically in a toroidal configuration, to yield a high efficiency and high coupling factor in a small volume.

The connection between the large diameter antenna loop and the fine wire used in the primary winding of a toroidal transformer can, however, be problematic in a transponder package. The antenna loop is often a stiff and strong material to meet the requirements of a particular application such as tires. Electrical connection between the stiff wire and the fine wire creates reliability and process problems. The material composition of the loop antenna may not permit soldering and the small space available may make establishing a strong mechanical connection difficult. Additionally, terminating a stiff wire in the small volume available in transponder packages may result in a weak and less than durable terminal junction. As a result, stress imposed on the connection from flexing or other movement of the loop antenna may cause the connection to fail. Moreover, in a typical transponder package, only a small amount of epoxy or other encapsulant material is available to resist such stress.

It is known in the art to position a transponder with a wound ferrite rod near a long wire loop. Current induced in the loop from the reader creates a magnetic field near the loop that is coupled into the rod. Other alternate known embodiments take a portion of the long loop and wind it into a small area "concentrator" winding. The concentrator winding concentrates the magnetic field and causes more inductive coupling to a ferrite rod transponder antenna placed proximate the winding. Electrically such a connection represents a loosely coupled transformer where the concentrator winding is the primary of the transformer and the winding on the ferrite rod is the secondary winding.

One problem inherent in incorporating known antenna-transponder assemblies into tire based systems is caused when the transponder transformer passes directly under the reader antenna once every rotation. If the transformer primary winding is magnetically open, as in the case of a ferrite rod, the magnetic field from the reader induces current in the secondary winding directly, counteracting the current induced from the antenna loop. This direct coupling is in reverse phase to the loop coupling. Consequently, at two spots in each rotation the two fields exactly counteract, causing a null in the coupling. This occurrence eliminates a preferable 360 degree read and can prevent reading transponders at high wheel speeds. It is accordingly, a need to provide an antenna-transponder assembly for tire systems that provides a continuous 360 degree read, a high coupling factor, and minimal interference between current induced by the reader magnetic field and that induced from the antenna loop.

Other issues relevant to mounting a transponder module in a tire include replacing the entire transponder module if it requires replacement and, in the case of battery-powered ("active") transponders, replacing the battery if required. Preferably, the transponder, whether "active" or "passive" should represent only a fractional cost of the overall tire. Hence, replacing an entire tire because of an inoperative transponder would be highly undesirable. In the case of permanently embedding the transponder within the tire, such as is shown at Figure 13 of US-A-5,500,065, replacing the transponder unit or any component thereof is a virtual impossibility.

US-A-5,181,975 discloses a number of locations and techniques for mounting a transponder within a tire. In a tire that has already been manufactured, the transponder may be attached to the axially inner side of the inner liner or to the axially outer side of the tire sidewall by means of a tire patch or similar material or device. It also discloses a pneumatic tire having an integrated circuit (IC) transponder and pressure transducer. As described in this patent, the transponder may be attached to an inner surface of the tire by means of a tire patch or other similar material or device. US-A-5,218,861 also discloses locations and techniques for mounting an integrated circuit transponder and pressure transducer within a pneumatic tire. The common problem shared in each prior art approach is that the transponder and antenna represent a system. For best magnetic coupling and to enable a 360 degree continuous read, it is desirable for the antenna to be annular. The manner of establishing an effective and mechanically secure coupling between a transponder and annular antenna is problematic and a satisfactory solution is not found in the art.

A final design challenge is to provide a standard platform capable of accommodating the wide variety of transponders and various types and sizes of pneumatic tires commercially available in the industry. Optimally, a standardized annular apparatus would accept components of different manufacturers and such uniformity in the annular system platform would serve to enhance its commercial acceptance.

Another aspect of the invention is to provide a method and an apparatus for mounting a transponder module in a pneumatic tire in such a manner that the transponder may conveniently be inserted, removed, replaced and/or maintained, either during tire manufacture or after. Additionally, the annular apparatus and method of employing the same would operate to optimally locate the transponder sensors within a tire cavity to facilitate accurate measurement. A further aspect of the present invention is to provide a method and an apparatus for mounting a transponder and an antenna for the transponder within a pneumatic tire, and to provide for a mechanically decoupled relationship between the transponder and the antenna. Nxt to this, a further asapect of the invention is to provide a method for mounting a transponder module in a pneumatic tire at any point in the tire manufacturing process, with minimal impact on tire performance.

One of the two spaced-apart metallic beads of a tire can satisfy the requirement of a large-diameter transformer primary winding mounted within a tire as described in US-A-5,181,975 and 5,218,861. The disadvantage is that while the bead location in a tire represents a low load and deformation region, this advantage is countered by the undesirable electromagnetic influence associated with the electrically conductive metallic wheel upon which the tire is mounted and to which the bead is closely adjacent. Consequently, location of the antenna-transponder assembly at the bead may protect the assembly from resulting strain from tire operation but communication quality may prove unsatisfactory due to interference problems attendant such a location.

Moving the antenna away from the bead region of the tire to the crown area, as taught by WO-A1-99/29525 avoids magnetic interference caused by the wheel rim but places the antenna in a high strain region. Consequent damage to the antenna from tire operation can result.

Depending on the RF generator, the transponder or other electronic devices involved, and input power requirements of the system, the antenna must also meet certain conductivity requirements as well as the mechanical requirements summarized previously. The cable construction of choice is one or more wires composed of copper, copper-clad steel, aluminum, or any other highly conductive metal. The wire for the antenna must have minimal electrical resistance so as to minimize power losses and signal transmission losses. In passive systems where power is supplied to the transponder package by a magnetic coupling between the antenna and a transponder coil, the antenna and antenna to transponder coupling must also facilitate a high energy transfer.

US-A- 4,319,220 discloses a system for monitoring tire pressure comprising wheel units in the tires and a common receiver. Each wheel unit has an antenna comprising a continuous wire loop embedded in an open annulus, which is disposed against the inner periphery of the tire for transmitting signals and for receiving power. US-A- 6, 147, 659 discloses the use of metallic component members in a tire as an antenna directly connected to a transponder. US-A- 4,074,227 discloses a tire pressure indicator for a tire and includes a transponder coupled to a signal coil that is disposed as a circular loop about the tire. US-A- 5, 491,483 discloses a single loop annular antenna mechanically and magnetically coupled to a transponder through an impedance transformer. US-A- 5,479,171 discloses a double coupled transponder and antenna assembly for a tire in which the antenna is mounted about the perimeter of a tire and includes a coupling coil at one end. A transponder is located in close proximity and is loosely coupled to the coil. Similarly, US-A-5,270,717 discloses a RF-ID transponder having a long antenna coupled to a transponder by a loose coupling coil. US-A- 5, 304,172 discloses a tire inflation pressure monitoring system that includes a loop antenna coupled to a receiver. US-A- 6,062,072 discloses a tire pressure monitoring system that includes a transmitter having an antenna with several windings which are integrated into the side walls or tread region of a tire. WO-A1- 99/29523 discloses an annular apparatus that may be incorporated in a ring of elastomeric material attached to the rim or embedded in the tire at its equatorial plane. US-A- 4,911,217 discloses a tire transponder and signal transmitter. US-A- 5,181,975 discloses a tire transmitter using the bead of the tire as a primary transformer winding. US-A- 5,218,861 discloses a transponder for a tire having a coil antenna. US-A- 6,228,929 discloses a tire comprising a strip of electrically conductive rubber. US-A- 6,255,940 teaches a patch mounted tire tag. US-A- 6,369,712 discloses an adjustable temperature sensor for a tire. WO-A1- 01/12452 discloses a transponder and coupling element for a tire. WO-A1- 01/17806 discloses a tire monitoring system. WO-A1- 01/36221 discloses a transponder and antenna apparatus for pneumatic tires. US-A1- 2001/0008083 discloses a tire monitoring system including an annular antenna. WO-A1- 99/29522 discloses an annular apparatus for a tire including an antenna embedded in the tire at its equatorial plane.

US-A-541574 and EP-A-1310389 describe a tire transponder system according to the preamble of claim 1 comprising a transponder, an annular antenna coupled to the transponder, and a carrier strip formed of a non-conductive material at least partially encapsulating the antenna.

While the prior art listed above functions well and represents several viable approaches toward meeting the needs of the industry, certain deficiencies inherent in each approach prevent the collective prior art from achieving a satisfactory system, assembly, and method for magnetically coupling an annular antenna to a transponder or for mechanically integrating an annular antenna-transponder system into a tire. On one hand, the prior art teaches antenna to transponder coupling techniques that achieve a less than satisfactory coupling factor. Moreover, the prior art presents less durable than desired transponder to loop connections that are, in general, complicated to effect and prone to breakage during tire manufacture and operation. Additionally, the prior art methods of incorporating an annular antenna-transponder system into a tire do not facilitate a convenient retrofit incorporation of the monitoring system into previously manufactured tires and do not readily allow for easy repair or replacement of the annular assembly or components should the need arise. Finally, existing prior art systems for coupling an annular antenna to a transponder package do not individually or collectively achieve the foregoing mechanical objectives while positioning the apparatus in an optimal location on or in a tire. On the other hand, the prior art either provides a less than satisfactory coupling factor, a less than durable transponder to loop connection, a complicated method of attaching the antenna loop to a transponder; or a relatively high system cost. Consequently, the industry remains in need of a system, assembly, and method for achieving a high annular antenna to transponder magnetic coupling while mechanically isolating the antenna from the transponder. Heretofore, a system providing an annular antenna that is magnetically coupled to but mechanically de-coupled from a transponder has not been attained. Additionally, a satisfactory system will comprise relatively inexpensive components that facilitate easy and inexpensive manufacture and assembly. Moreover, a satisfactory system will be durable and capable of withstanding the stress described above that is attendant many applications for the system including tires.

### Summary of the Invention

The subject invention overcomes the deficiencies in known systems and methods for coupling an antenna to an electrical device such as a transponder. In one aspect of the invention, an annular antenna is coupled to a transponder either directly or indirectly . According to one embodiment of the invention, a toroidal body composed of material having high electro-magnetic permeability is coupled to a transponder device by a winding. The antenna loop is passed directly through the center opening in the toroid and magnetically couples directly with the toroid body without utilization of a winding or mechanical connection. Electrical coupling occurs between the loop and the toroid, and therefore into the winding to the transducer because the current induced in the loop antenna from the transceiver magnetic field creates a magnetic near the loop. Thus, the magnetic field is induced directly into the toroid body that closely surrounds the antenna loop wire(s). Such a coupling is hereinafter designated as Direct Magnetic Coupling (DMC). The DMC approach allows the antenna loop to pass through the transponder package without a mechanical connection and therefore eliminates the problems with making and maintaining a mechanical connection between the loop wire and the transponder package. The winding coupling the toroid to the transponder package may be varied to accommodate optimum impedance matching. Consequently, the DMC technique provides a high energy coupling with high resistance to breakage since a mechanical connection between the antenna loop and the transponder is avoided. Furthermore, the process of attaching the antenna loop to a transponder is simplified and remote coupling between wire bundles or cables and transponders is facilitated. Moreover, the magnetic coupling between an annular antenna and transponder using the DMC technique is maintained in a continuous 360 degree read and dead zones in the interrogation area are avoided.

According to another aspect of the invention the annular assembly is attached to the tire at a location that provides low exposure to strain and low vulnerability to electromagnetic influence from the metallic wheel rim.

Pursuant to yet another aspect of the invention, the antenna and the transponder are at least partially embedded into a non-conductive carrier strip to form a ring assembly to render the antenna and transponder package unitarily transportable. Such an assembly may be incorporated into a tire during the tire manufacturing process but preferably is attached to the tire by adhesives or other known methods in a post-manufacture attachment procedure. The carrier strip serves at least a fourfold purpose. First, the strip protects the integrity of the antenna wire and transponder encapsulated therein. Secondly, the strip creates a unitary assembly that may be conveniently transported, inventoried, and deployed to retrofit existing tires with a monitoring system or to replace defective components should the need arise. Thirdly, the strip maintains the antenna in an intended optimal position relative to the transponder toroidal body through which it extends. Finally, the carrier strip serves to maintain an optimal orientation of the transponder to the tire cavity.

According to a further aspect of the invention, a method is provided for associating a loop antenna with an electronic device such as a transponder and the location of the antenna-transponder assembly on a tire in a position that protects the assembly from strain induced by tire operation and electromagnetic interference from the wheel rim. The method further comprises the steps of coupling the loop antenna to the electronic device either directly or indirectly as through a toroidal body such as a transformer. A further step includes at least partially encapsulating the antenna and the electronic device package in a non-conductive carrier strip material so as to render the antenna and the transponder package unitarily transportable and to fix the relative positions of the antenna and transponder into respective optimal orientations.

According to another aspect of the invention, a toroidal body is formed from material having a high electromagnetic permeability. No primary winding is used in conjunction with or as part of the toroidal device. Rather, the antenna loop is passed directly through the center opening in the toroid and couples magnetically with the toroidal body absent a primary winding. Magnetic coupling occurs between the loop and the toroid, and therefore into the secondary winding because the current induced in the loop antenna from the transceiver magnetic field creates a magnetic field near the loop. The magnetic field is induced directly into the ferrite toroid that closely surrounds the loop wire(s) by Direct Magnetic Coupling (DMC). The DMC approach allows the antenna loop to pass through the transponder package without a mechanical connection and therefore eliminates the problems with making and maintaining the connection between the loop wire and the transponder package discussed previously. The secondary turn ratio may be varied to accommodate optimum impedance matching. Consequently, the DMC technique provides a high energy coupling and high durability since external connection between the antenna loop and the toroidal body is eliminated. Furthermore, the process of attaching the antenna loop to a transponder is simplified rendering any remote coupling between wire bundles or cables and transponders substantially less difficult.

According to another aspect of the invention, the antenna and the transponder are at least partially embedded into a non-conductive encapsulant material to render the antenna and transponder package unitarily transportable. Such an assembly facilitates ease of incorporation of the assembly into a tire during the tire manufacturing process or in a post-manufacture attachment procedure. Moreover, the encapsulant material further serves to maintain the antenna and the toroidal body in mechanically decoupled yet electromagnetically coupled advantageous relationship.

According to a further aspect of the invention, a method is provided for associating a loop antenna with an electronic device such as a transponder through a toroidal body having a central opening. The method comprises the steps of positioning the loop antenna to project through the central opening in non-contacting relationship with the toroidal body, establishing a direct magnetic coupling between the loop antenna and the toroidal body, and coupling the electronic device to the antenna through the toroidal body. A further aspect of the invention is to include the steps of at least partially encapsulating the antenna and the electronic device package in a non-conductive material so as to render the antenna and the electronic device package unitarily transportable and to fix the relative position between the antenna and the electronic device in a specified orientation.

The advantages of the invention, which will be apparent to those skilled in the art, are achieved by preferred and alternative embodiments that are described in detail below and illustrated by the accompanying drawings.

### Brief Description of the Drawings

Fig. 1 is a perspective view of a tire and the subject annular apparatus with portions of the tire removed for the purpose of illustration.
Fig. 2 is a sectional schematic of a tire mounted to a rim and illustrating alternative locations in which to mount the subject annular apparatus.
Fig. 3 is an enlarged perspective view of a tire portion having a transponder and antenna assembly positioned against a tire sidewall surface.
Fig. 4 is a sectional schematic view of a tire and wheel assembly mounted to a vehicle frame.
Fig. 5 is an enlarged perspective view of the subject antenna projecting through a transponder module.
Fig. 6 is an enlarged perspective view of a portion of the subject annular assembly.
Fig. 7 is a front perspective view of the subject transponder module.
Fig. 8 is an exploded perspective view thereof.
Fig. 9 is a top plan view thereof.
Fig. 10 is a longitudinal section view through the transponder module of Fig. 9 taken along the line 10-10.
Fig. 11 is a transverse section view through the transponder module of Fig. 9 taken along the line 11-11.
Fig. 12 is a perspective view of the module circuit board.
Fig. 13 is a perspective view of the receiver module.
Fig. 14 is a perspective view of an alternative embodiment of the transponder module.

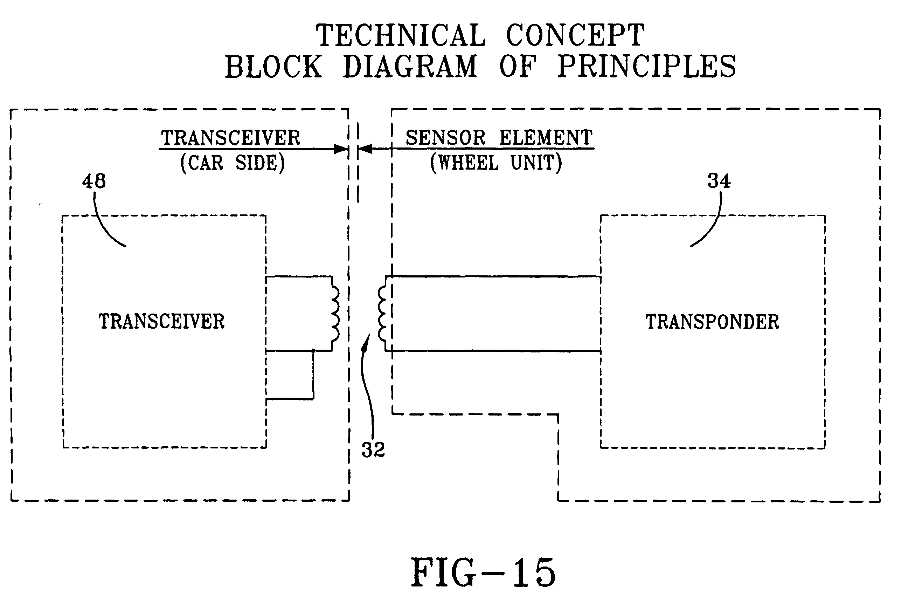

Fig. 15 is a block diagram of the car transceiver and tire monitoring system.

### Definitions

"Axial" and "axially" means the lines or directions that are parallel to the axis of rotation of the tire.

"Bead" or "bead core" generally means that part of the tire comprising an annular tensile member of radially inner beads that are associated with holding the tire to the rim; the beads being wrapped by ply cords and shaped, with or without other reinforcement elements.

"Circumferential" most often means circular lines or directions extending along the perimeter of the surface of the annular tread perpendicular to the axial directs; it can also refer to the direction of the sets of adjacent circular curves whose radii define the axial curvature of the tread, as viewed in cross section.

"Inner" means toward the inside of the tire and "outer" means toward its exterior.

"Lateral" means in a direction parallel to the axial direction.

"Radial" and "radially" mean directions radially toward or away from the axis of rotation of the tire.

"Shoulder" means the upper portion of sidewall just below the tread edge.

"Sidewall" means that portion of tire between the tread and the bead.

### Detailed Description of the Preferred Embodiments

As used herein, a "transponder" is an electronic apparatus (device) capable of monitoring a condition such as air pressure within a pneumatic tire, and then transmitting that information to an external device. The external device can be either a RF (radio frequency) reader/interrogator or, simply a RF receiver. A simple receiver can be used when the transponder is "active", and has its own power source. A reader/interrogator would be used when the transponder is "passive" and is powered by a RF signal from the reader/interrogator. In either case, in conjunction with the external device, the transponder forms a component of an overall tire-condition monitoring/warning system. A "ferrite toroid" is coupled to the transponder by a secondary winding. As used herein, a "ferrite toroid" is a toroidal body formed from ferro-magnetic material by a continuous curved surface and including a central through opening. The toroidal body may be cylindrical, oblong, symmetrical, or asymmetrical without departing from the invention herein set forth. In order to send or receive RF signals, a transponder must have an antenna. This antenna is preferably annular in configuration and may either be incorporated into the tire during manufacture or affixed to the tire by way of a post manufacture procedure. The antenna may comprise a single wire or a plurality of strands. Various commercially available transponders, sensors, and other electrical devices deployed in combination with an annular antenna, in particular formed from conventional conductive materials, are suitable for use in conformance with the principles of the subject invention.

A toroidal body composed of a material of high electro-magnetic permeability is coupled to the transponder by a winding. In conventional systems, the antenna is coupled to the toroidal body by means of a primary winding and the transponder is coupled to the toroidal body by means of a secondary winding. As explained below, the primary winding is eliminated in accordance with the practice of the subject invention. The "secondary" winding that couples a transponder to the toroidal body hence is referred to herein as merely the "winding". For the purpose of the subject disclosure and the invention, the annular system is not transponder specific. That is, a wide range of commonly available transponders, sensors, and associated electronics may be packaged and utilized with the subject invention.

As used herein, a "toroid" is a body formed from material having a high elector-magnetic permeability by a continuous curved surface and includes a central through bore. As used herein, a "toroidal body" thus includes a transformer having one or more windings.

As used herein, an "annular antenna" may be circular, oblong, symmetrical, or asymmetrical without departing from the subject inventive principles. However, the preferred configuration of the antenna is circular and sized to overlap the tire sidewall region to which it attaches.

Acceptable materials for the antenna wire include steel, aluminum, copper or other electrically conducting wire. As disclosed in this patent document, the wire diameter is not generally considered critical for operation as an antenna for a transponder. For durability, stranded steel wire consisting of multiple strands of fine wire is preferred. Other wire options available include ribbon cable, flexible circuits, conductive film, conductive rubber, etc.

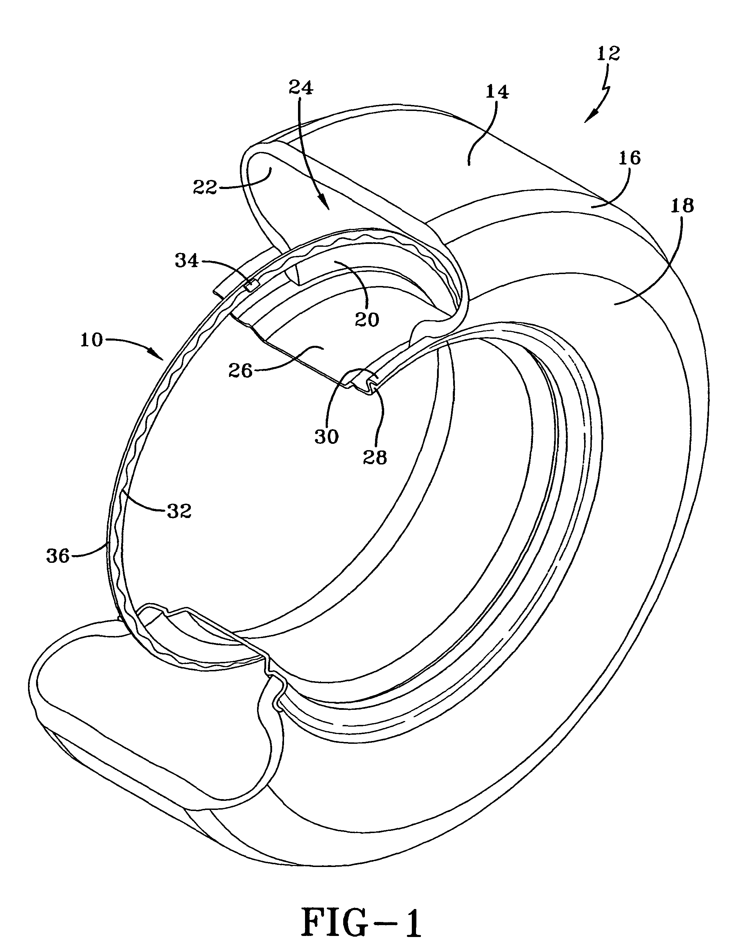

Referring initially to Fig. 1, a preferred embodiment 10 of the subject invention is shown deployed within a tire 12. The tire 12 is formed from conventional materials such as rubber or rubber composites by conventional means and may comprise a radial ply or bias ply configuration. A typical tire 12 is configured having a tread 14, a shoulder 16, an annular sidewall 18, and a terminal bead 20. An inner liner 22 is formed and defines a tire cavity 24. The tire 12 is intended for mounted location upon an annular rim 26 having a peripheral rim flange and an outer rim flange surface 30. Rim 26 is conventionally configured and composed of a suitably strong metal such as steel.

An annular antenna 32 is provided and, in the preferred embodiment, embodies a sinusoidal configuration. Antenna 32 may be alternatively configured into alternative patterns or comprise a straight wire(s) if desired and may be filament wire, or cord or stranded wire. Acceptable materials for the wire include steel, aluminum, copper or other electrically conducting wire. As mentioned previously, the wire diameter is not generally considered critical for operation as an antenna and multiple strands of fine wire is preferred. The curvilinear form of antenna 32 provides flexibility and minimizes the risk of breakage during manufacture and use explained below.

With continued reference to Fig. 1, a transponder module 34 of the general type described above is provided and may include means for sensing tire parameters such as pressure and temperature. Included as part of the apparatus 10 is a carrier strip 36 of material formed into the annular configuration shown. Carrier strip 36 is formed of electrically insulating, preferably semi-rigid elastomeric material common to industry such as rubber or plastic. The strip 36 is formed to substantially encapsulate the antenna wire(s) 32 and at least a portion of the transponder module 34 in the manner described below. In the post manufacturing state, therefore, the apparatus 10 comprising antenna 32, transponder module 34, and carrier strip 36, in a unitary, generally circular, semi-rigid assembly that is readily transportable and handled for attachment to tire 12. The diameter of the apparatus assembly 10 is a function of the size of the tire 12 and the preferred attachment location thereon.

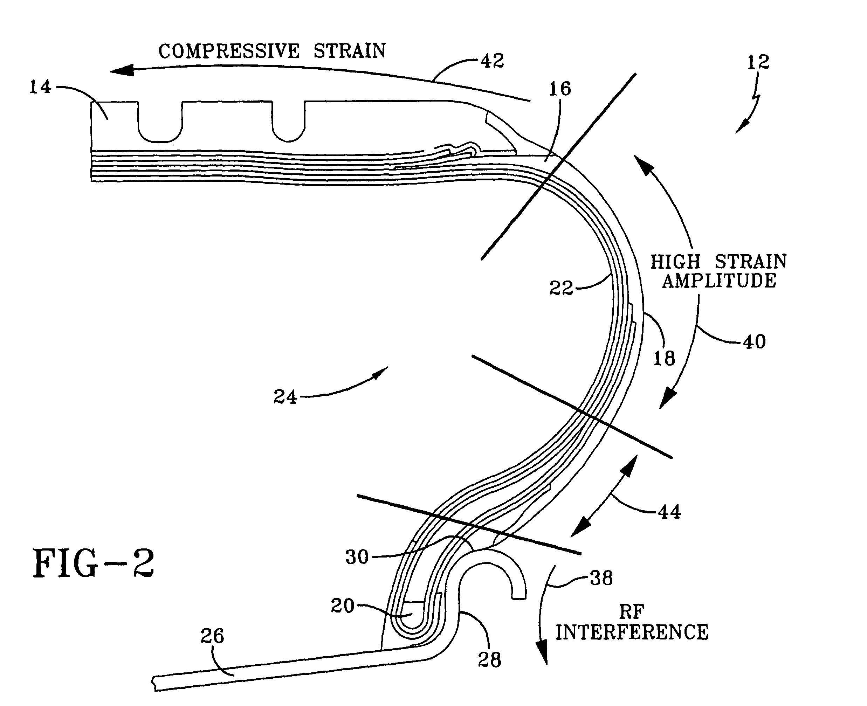

Fig. 2 illustrates a preferred location for annular apparatus 10 on a tire in accordance with the present invention. The tire 12 is mounted to a rim 26 in conventional fashion. The bead 20 of tire 12 is disposed within the rim 26 against flange 28. Upper surface 30 of the flange 28 is located above a lower edge of the tire bead 20. As will be appreciated, the flange 28 shields the lower portion of the tire 12 comprising bead 20 and defines an "RF INTERFERENCE" region 38 of the tire. A region 40 of tire 12 above region 38 at the sidewall 18 is further defined as a "HIGH STRAIN AMPLITUDE" region. As sidewall 18 flexes during operation of the tire on a vehicle, region 40 experiences a high level of strain. The region 42 located at the tread portion of the tire is referred to herein for explanatory purposes as a "COMPRESSIVE STRAIN" region. It is at region 42 that the tire 12 experiences a high level of compressive strain as the tire is operatively utilized.

In combined reference to Figs. 1 and 2, the apparatus 10 is affixed to liner 22 of the tire 12 either during manufacture of the tire or, as preferable, in a post-manufacture assembly operation. Attachment may be by means of an adhesive or the apparatus may be embedded into the tire itself during manufacture. Adhesives commonly utilized in the industry for tire patch and repair may be employed. The location on the tire to which apparatus 10 is attached pursuant to the instant invention is region 44 in Fig. 2, located between the RF INTERFERENCE region 38 and the HIGH STRAIN AMPLITUDE region 40. It will be appreciated that region 38 would be equitable from a mechanical perspective since tire region 38 is relatively rigid, protected by rim flange 28, and, experiences a relatively low strain level during operation of the tire. From an electrical perspective, however, region 38 of the tire 12, shielded by rim flange 28, is ill suited as a location for the transponder 34.

Location of the apparatus 10 within region 40 of the tire sidewall 18 is an option. Such a location would avoid the RF Interference caused by the rim. However, the tire sidewall 18 experiences high levels of strain during operation of the tire. Consequent damage to or breakage of components affixed to the sidewall may occur. Similarly, location of the apparatus 10 at the tread region 42 of tire 12 would avoid RF Interference from the rim but the tread region experiences high compression strain during operation of the tire. Location of tire monitoring system devices in such a location would be therefore be undesirable from a mechanical perspective.

Consequently, apparatus 10 is preferably located pursuant to the invention within region 44 of the tire 12. Region 44 is generally an annular region located substantially between 10 to 30 millimeters above the upper surface 30 of the rim flange 28 when tire 12 is mounted to rim 26. Within region 44, the apparatus is free from RF Interference from the flange 28 of rim 26. Region 44 is further a relatively low strain amplitude region of the tire 12. Thus, region 44 of the tire 12 represents an optimal location for apparatus 10 that balances the need for minimal RF Interference from the rim while mechanically protecting the apparatus 10 from damage due to strain forces introduced into the tire during its operation.

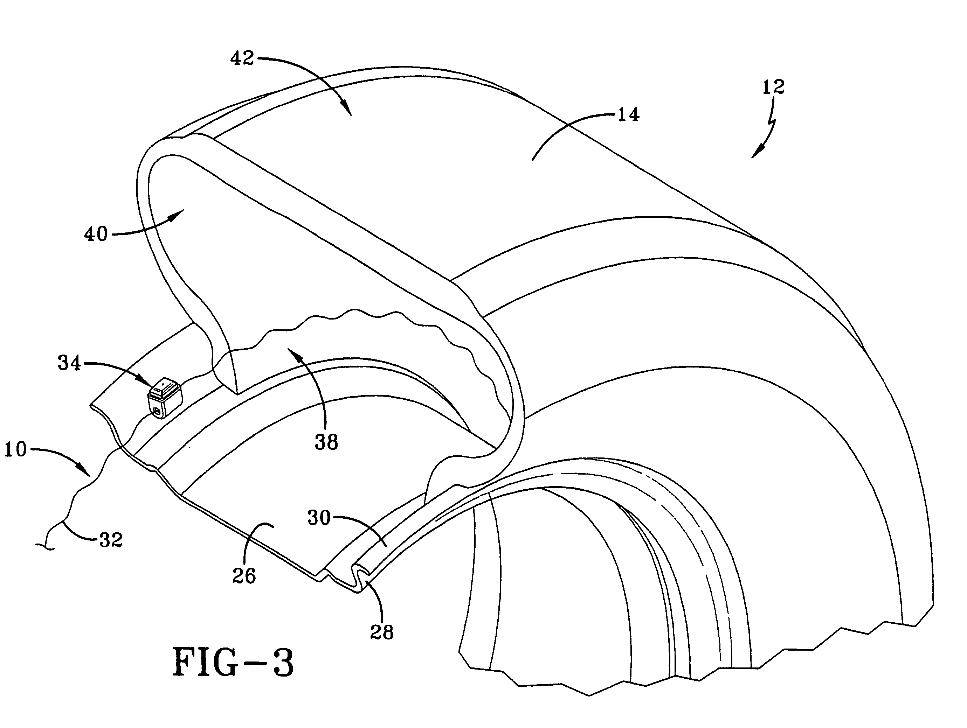

Fig. 3 illustrates an alternative embodiment of the subject apparatus 10 in which the carrier strip 36 is eliminated and the antenna 32 and transponder 34 are embedded directly within the tire 12 during its manufacture. The location of the antenna 32, again, is within region 44 described as optimal in the preceding paragraph; that is, approximately 10-30 millimeters above the rim flange surface 30 when tire 12 is mounted to rim 26. Attaching the apparatus 10 into tire 12 during its manufacture is possible pursuant to the invention but is not preferred since such a procedure would necessarily expose the transponder 34 and antenna to potentially damaging forces as the tire is formed. Also, implanting an exposed annular antenna 32 and transducer 34 makes replacement and repair of the assembly in the event of damage or breakage problematic. Consequently, it is preferable to attach the apparatus 10 to the tire 12 in a post manufacture process by adhesives or the like. The advantages of post manufacture assembly is that the apparatus 10 is spared the stress of the tire manufacturing process and the apparatus 10 may readily be removed and replaced in the event of breakage. Moreover, the unitary apparatus 10 shown in Fig. 1 may readily be retrofitted by adhesive to pre-manufactured or used tires. Finally, the annular apparatus is a unitary assembly and may be conveniently inventoried in a range of diametric sizes so as to fit various sized pre-manufactured tires.

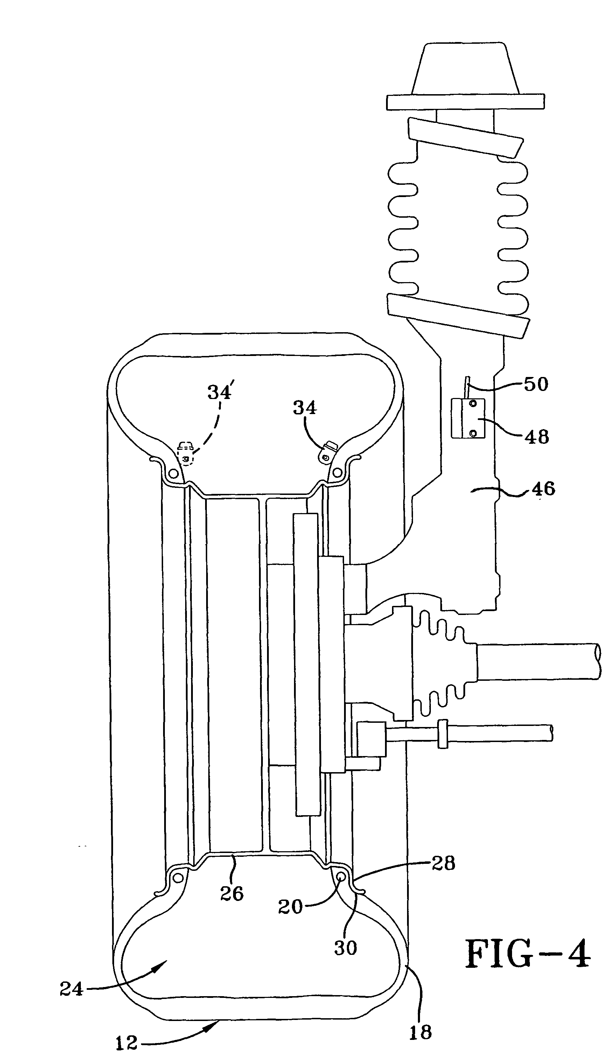

Fig. 4 shows the transponder 34 located at its preferred location on a tire 14 and exposed to the tire cavity 24. The transponder may include pressure and temperature sensors for monitoring the status of the cavity 24 and communicate such information to a remote transceiver 48 mounted to the vehicle frame 46. The transceiver 48 is positioned opposite the antenna of the apparatus 10 and is in continuous communication therewith throughout the 360 degrees rotation of the tire 14. Transceiver 48 is of a type commercially available in the industry and is electrically connected by lead 50 to conventional logic, processing and display electronics of the vehicle (not shown). As described previously, the position of the transponder module 34 is above the rim flange 28 so that RF communication between the transponder and the transceiver 48 is not impaired.

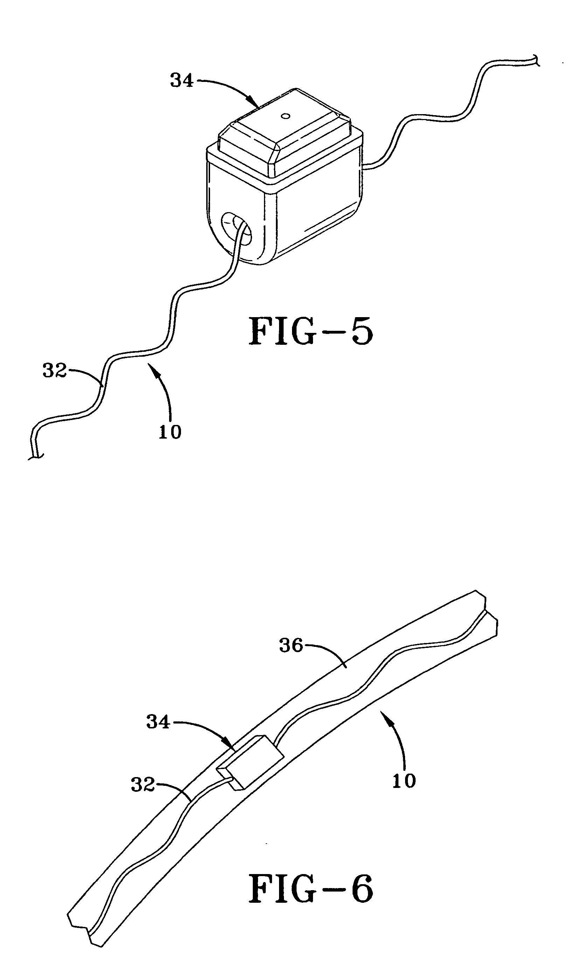

With collective reference to Figs. 5-12, the configuration of the annular apparatus 10 will be explained in greater detail. The transponder module generally comprises a base housing 52 formed of rubber or plastic material by conventional means. The housing 52 includes opposite sidewalls 54, 56 joining along a radiused bottom surface 55 to opposite vertical end walls 58, 60. The walls 54, 55, 56, 58, and 60 define a central compartment 62. A through bore 64 extends through lower portion of the end walls 58, 60 in communication with the compartment 62.

The housing 52 further includes a cap member 68 likewise formed of conventional rubber or plastic material by conventional means such as injection molding. The cap member 68 includes an upper protrusion or "snout" 70 comprising vertical sidewalls 72 terminating at a horizontal upper surface 74. A sensor port or aperture 76 is positioned at the middle of surface 74 and extends therethrough. A flange 78 peripherally defines a lower boundary of cap 68 and provides a horizontal ledge surface 80 that merges at a right angle with the vertical sidewalls 72. The flange 78 is dimensioned to rest upon the upper end of the module base housing 52 as will be appreciated. The horizontal ledge surface 80 of cap 68 is disposed between the flange 78 and the vertical sidewalls 72. Upper sidewall portions 81 are provided that taper inwardly toward upper surface 74. The tapered profile of the cap 68 facilitates convenient and reliable manufacture of the apparatus 10.

In the illustrated embodiment, the transponder module 34 further includes a toroidal body (toroid) 82 composed of a material, such as a ferrite, having a high electro-magnetic permeability. The body 82 generally comprises a cylinder having an elliptical cross-sectional configuration. The elliptical sectional configuration of body 82 serves to reduce its vertical dimension and allows for a more compact packaging of the body 82 within a transponder module. The body 82 includes a winding 84, as shown, terminated to conductor leads 86. A central through bore 88 projects through the body 82 in an axial or longitudinal direction.

A protective sleeve member 90 is further provided sized for receipt and residence with the bore 88 of body 82. The sleeve 90 comprises generally an elongate cylinder having an elliptical cross-section. The sleeve 90 further includes a circumferential sidewall 92 and an axial or longitudinal through bore 94. Bore 94 is offset relative to the longitudinal axis of the sleeve 90 so as to create a wall 95 of increased thickness at an outward side of the sleeve 90. An outwardly open longitudinal channel 96 is formed within the wall 95 as shown. The sleeve 90 is closely received within bore 88 of body 82 and winding 84 is received within the channel 96 of sleeve 90.

With continued reference to Figs. 5-12, a circuit board 98 mounts within the central compartment 62 of the transponder base housing 52. Circuit board 98 is typically configured to comprise an electronic package 100 mounted to an upper surface 102 and may include an electronic package 106 mounted to an underside 104. The electronic packages 100, 106 are generically depicted in Figs. 5-12 and include the transponder sensors, logic, and RF transmitting systems necessary to perform tire cavity monitoring activity. The subject invention is not transponder design specific and any one of multiple conventional transponder systems may be utilized and mounted to one or both surfaces 100, 104 of circuit board 98. The board 98 further includes lead receiving channels 108 fabricated within a board side.

Assembly of the transponder module proceeds generally as follows. The sleeve 90 is inserted within the through bore 88 of the toroidal body 82 which is then inserted into the chamber 62 of the housing base 52. Situated within chamber 62, the through bore 94 of sleeve 90 and the bore 99 of body 82 co-axially align with housing through bore 64. The winding 84 of body 82 is received within channel 96 of the sleeve 90 and leads 86 are routed upward. The number of turns in winding 84 is designed to impedance match the transponder electronics in a conventional manner. The board 98 mounts horizontally in the preferred embodiment within the housing 52 above the sleeve 90 and the toroidal body 82 through passage. Leads 86 from the winding 84 are routed into the channels 108 and electrically connected to the electronics 100, 106 on circuit board 98. The peripheral flange 78 of the cap member 68 is thereafter positioned upon the upper surface 66 of the housing 52 and the interface is sealed by application of a suitable adhesive.

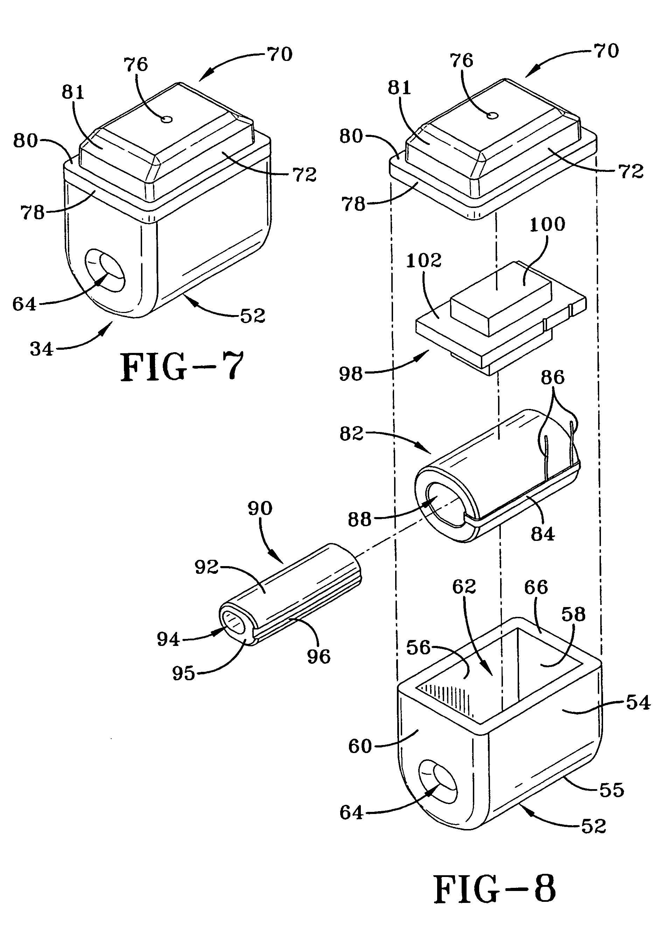

In the assembled condition, the transponder module 34 is as shown in Fig. 7. The transponder module housing, internal assembly, and component orientation may be varied if desired in the practice of the invention. The transponder module 34 thus comprises a sealed self contained unit that includes circuit board and transponder electronics for monitoring parameters of a tire cavity such as pressure and temperature. The electronics of the transponder module 34 may further include tire identification information. The toroidal body 82 is electro-magnetically and mechanically coupled to the transponder package 24 via winding 84. Alternatively, the body 82 may be eliminated and the antenna 32 electrically coupled directly to the transponder. The resultant annular assembly would likewise be positioned in the optimum location described above in a tire. A further alternative would be to couple the antenna 32 to the transponder through a transformer of conventional configuration having primary and secondary windings.

The antenna 32 is routed through the transponder module 34 as seen best from Fig. 5 and comprises a continuous loop. The antenna 32 in the preferred embodiment is formed into a sinusoidal configuration, the sinusoidal shape serving to provide antenna elongation capacity with which to counter strain forces in the tire from its operation. The antenna 32 projects through bore 94 of sleeve 90, the bore 88 of body 82, and the through bore 64 of housing 52 in non-contacting manner. The antenna 32 is thus mechanically decoupled from the transponder module 34. It will be noted that the toroidal body 82 functions as a transformer in which the primary winding is eliminated. The antenna loop 32 is passed directly through the through bore 88 of the toroid 82 and couples magnetically with the body absent a primary winding. Electrical coupling occurs between the loop 32 and the toroidal body 82, and therefore into the winding 84 because the current induced in the loop antenna 32 from the transceiver 48 magnetic field creates a magnetic near the loop. The magnetic field is induced directly into the toroidal body 82 that closely surrounds the antenna loop wire(s) 32.

Such a coupling, designated herein as Direct Magnetic Coupling (DMC), affords several distinct advantages. The DMC approach allows the antenna loop to pass through the transponder package without a mechanical connection and therefore eliminates the problems with making and maintaining a connection between the loop wire and the transponder package discussed previously. The winding 84 turn ratio may be varied to accommodate optimum impedance matching. Secondly, the DMC technique provides a high energy coupling. Furthermore, the process of attaching the antenna loop to a transponder is simplified rendering the remote coupling between wire bundles or cables and transponders substantially less difficult. Moreover, the magnetic coupling between annular antenna and transponder using the DMC technique is maintained in a continuous 360 degree read and dead zones in the interrogation area are avoided.

As discussed previously, the assembly of Fig. 5 may be embedded into a tire during its manufacture, resulting in the tire assembly shown in Fig. 3, although it is not preferable to do so. Incorporation of the annular apparatus during tire build imposes substantial strain into the tire monitoring components and may result in component breakage. In a post cure state, removal of an annular assembly or any component therein may be difficult or impossible. Consequently, it is preferred that the subject annular assembly be affixed to a tire as a post tire build operation.

To do so, the antenna 32 and transponder module sub-assembly are first embedded within a rigid or semi-rigid carrier strip 36 shown in FIGS. 1 and 6. The strip 36 is formed from a non-conductive encapsulant material such as rubber or plastic and an annular assembly results that is unitary and readily transported, stored, and handled. Creation of a unitary combination of antenna, transponder, and carrier strip facilitates ease of incorporation of the annular assembly into a tire in a post build procedure. The assembly is positioned against the tire liner 22 at a location within the optimum region 44 discussed previously. The strip 36 is adhered to the tire by application of commonly available adhesives. Should the antenna transponder module break in transit or malfunction, the assembly 10 may be removed and replaced without damaging the tire. Moreover, the encapsulant material further serves to maintain the antenna and the toroidal body in their intended mutual orientation.

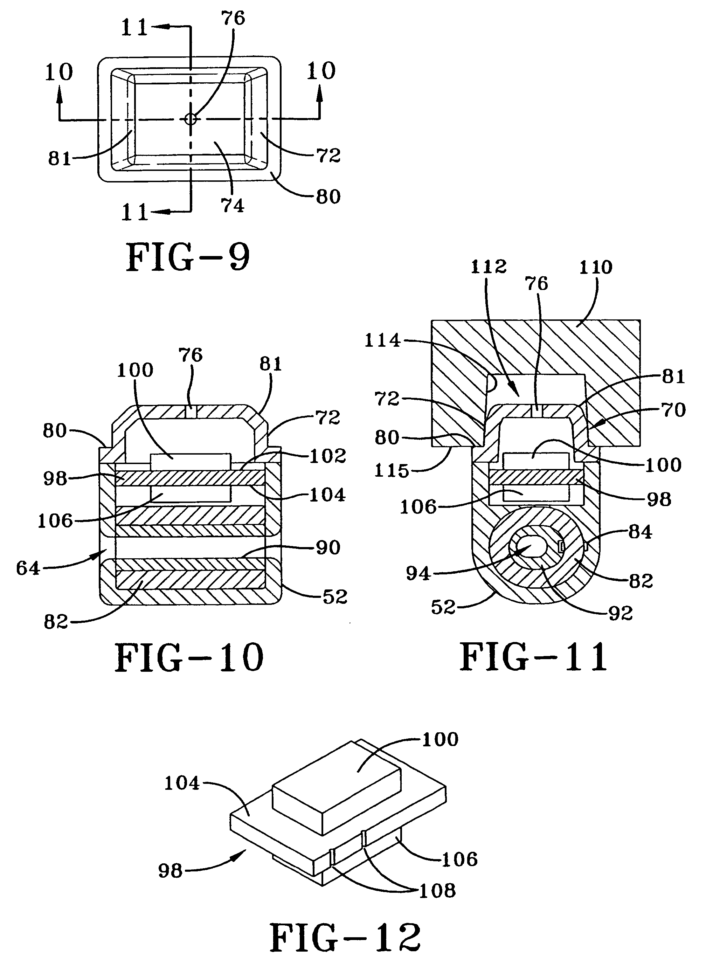

In order to facilitate the ready incorporation of the transponder module 34 into the carrier strip 36, the housing of the transponder 34 comprising cap 68 and base housing 52 are of a unique stepped and tapered configuration. The cap comprises the tapered snout 70 at an upper end defined by inward tapering surfaces 81. The cap 68 steps outward at the lower peripheral edge flange 78. As best viewed from Figs. 7 and 11, the housing snout 70 is received within a cavity 112 within a mold block 110. The tapered profile renders the transponder housing self registering and centers the housing within cavity 112 prior to introduction of the carrier strip material. In the centered position, sidewalls 114 of the mold block 110 closely abut against cap surfaces 72 and lower surfaces 115 of block 110 abut the upper surface 80 of cap flange 78 to isolate and protect the snout 70 of cap 68 within the mold cavity 112. A bottom half of the mold block (not shown in Fig. 11) closes against the lower surfaces 115 of block 110 and material to form the carrier strip 36 is introduced into the mold cavity. Sealing abutment between mold block surfaces 114, 115 and cap surfaces 72, 80 prevent the carrier material from entering cavity 112 and thereupon invading the transponder aperture 76. Material forming the carrier strip 36, it will be appreciated, is filled up to the surface 80 of the flange 78, entirely encapsulating the antenna 32 and partially encapsulating the base 52 of the transponder module 34.

The mold halves are separated and the annular carrier strip with integrally captured antenna and transponder package removed from the mold. The subject annular assembly is thereafter affixed to the inner liner 22 of the tire 12 in the manner described previously and shown in Figs. 1 and 6. The transponder module 34 may be oriented flat against the carrier strip as shown in Fig. 3 or oriented on end as shown in broken line at 34'. Whichever orientation is utilized, the strip material 36 serves to maintain the transponder and antenna in a preferred optimal mutual orientation and the transponder module 34 in an optimal orientation relative to the tire cavity. The port 76 in the upper surface 74 of the cap 68 is exposed to the tire cavity 24 free of the carrier strip 36. Direct communication between the tire cavity 24 and sensors mounted to the circuit board 98 is thereby facilitated through port 76. The stepped and tapered configuration of the transponder module 34 is preferred in order to make the module self centering in the mold and to allow a seal to be established between the mold and outer surfaces of the transponder module. The annular path defined between ledge surface 80 and vertical surface, sidewalls 72 of cap 68 and the inward facing surfaces of mold sidewalls 114 deters the flow of carrier material into cavity 112. Were the flow of material not inhibited, the material could enter cavity 112 and proceed through port 76 to the circuit board 90. The electronics and sensors mounted upon circuit board 98 are thus protected during the process of molding carrier strip 36 around the transponder module base 52 by the stepped configuration of the transponder housing.

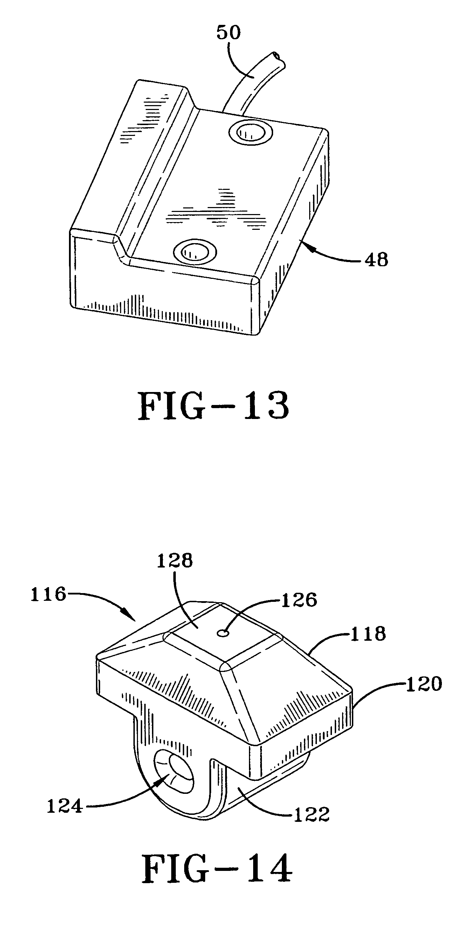

Fig. 14 depicts an alternatively configured transponder module 116 having a pyramidal cap 118 and base 120. The base housing 120 provides a through bore 124 in a like manner to the preferred embodiment described previously. The sides of the cap 118 taper inward to upper surface 128 having a central access port 126.

From the foregoing, it will be appreciated that the subject invention overcomes the deficiencies in known systems and methods for coupling an annular antenna to an electrical device such as a transponder. Pursuant to the invention, a toroidal body having high electro-magnetic permeability is coupled to the transponder device by a variable turn winding. An antenna loop is passed directly through the center opening in the toroid and magnetically couples directly with the toroid body without utilization of a winding or mechanical connection. A high magnetic coupling occurs between the antenna loop and the toroid, and therefore into the winding to the transducer because of the current induced in the loop antenna from the transceiver. Elimination of a mechanical connection between the antenna and the transponder avoids the problems with making and maintaining a mechanical connection between the antenna loop wire and the transponder package. A high energy coupling with minimal risk of breakage is thereby achieved. Moreover, the annular assembly may be attached pursuant to another aspect of the invention to the tire at a location that provides low exposure to strain and low vulnerability to electromagnetic influence from the metallic wheel rim. In the preferred embodiment, the antenna and the transponder are at least partially embedded into a non-conductive carrier strip to form a ring assembly to render the antenna and transponder package unitarily transportable. The carrier strip further acts to protect the integrity of the antenna loop and the transponder components. Such an assembly may be incorporated into a tire during the tire manufacturing process but preferably is attached to the tire by adhesives or other known methods in a post-manufacture attachment procedure. The carrier strip protects the integrity of the antenna wire and transponder encapsulated therein; creates a unitary assembly that may be conveniently transported, inventoried, and deployed to retrofit existing tires with a monitoring system or to replace defective components should the need arise; maintains the antenna in an optimal relationship to the transponder toroid body through which it extends; and serves to facilitate an optimal orientation of the transponder to the tire cavity.

## Claims

1. An apparatus comprising a transponder (34) and a loop antenna (32) coupled to the transponder (34), **characterized by** a toroidal body (82) composed of a material having high electromagnetic permeability coupled to the transponder (34) and to the antenna (32), the toroidal body (82) having a trough bore (88) through which the antenna (32) extends in magnetically coupled, non-contacting and mechanically decoupled relationship with the toroidal body (82).

2. The apparatus of claim 1, wherein a carrier strip (36) formed of a non-conductive material at least partially encapsulates the antenna (32) and the transponder (34) to maintain the antenna (32) in a prescribed orientation relative to the transponder (34).

3. The apparatus according to claim 2, wherein the carrier strip (36) substantially encapsulates the entirety of the antenna (32).

4. The apparatus according to claim 2 or 3, further comprising the toroidal body (82) and the transponder (34) residing within a common housing (52) and the carrier strip (36) maintaining a preferred orientation of the housing (52) relative to the antenna (32).

5. The apparatus according to any of the preceding claims 2 to 4, wherein the carrier strip (36) renders the apparatus (10) a unitary assembly.

6. The apparatus according to any of the preceding claims, wherein the apparatus (10) includes an annular lower sidewall region of a complementarily sized tire (12).

7. The apparatus according to claim 6, wherein the tire (12) mounts to a wheel rim (26) and the lower sidewall region of the tire (12) resides within a bounded annular surface lying between ten to thirty millimeters above the upper surface of the wheel rim (26).

8. The apparatus according to claim 1, wherein the loop antenna (32) lies within a first plane normally disposed to the toroidal body through bore (88).

9. The apparatus according to claim 1 or 8, wherein the loop antenna (32) is in direct magnetically coupled relationship and mechanically de-coupled relationship with the toroidal body (82).

10. The apparatus of claim 1, wherein the antenna (32) resides within and extends substantially co-axially with the through bore (88) in mechanically decoupled relationship with the toroidal body (82).

11. The apparatus according to claim 10, wherein the antenna (32) is at least partially embedded in a substantially non-conductive encapsulant material.

12. The apparatus according to claim 10 or 11, wherein the antenna (32), the transponder (34) and the toroidal body (82) are rendered unitarily transportable by the encapsulant material.

13. A method for mounting an apparatus according to claim 1 to a tire (12), the method comprising the steps of providing an annular antenna (32), coupling a transponder (34) to the annular antenna (32), encapsulating at least part of the antenna (32) and the transponder (34) within a carrier strip (36) of non-conductive material to create a ring assembly (10), and attaching the ring assembly (10) to a sidewall region of the tire (12).

14. The method according to claim 13, further comprising the step of sizing the ring assembly (10) with the antenna (32) to overlap a bounded annular surface between ten to thirty millimeters above an upper surface of a wheel rim (26) to which the tire (12) mounts.

## Patentansprüche

1. Ein Apparat, der einen Transponder (34) und eine an den Transponder (34) gekoppelte Schleifenantenne (32) umfasst, **gekennzeichnet durch** einen aus einem Material mit hoher elektromagnetischer Permeabilität zusammengesetzten kreisringförmigen Körper (82), der an den Transponder (34) und an die Antenne (32) gekoppelt ist, wobei der kreisringförmige Körper (82) eine durchgehende Öffnung (88) aufweist, **durch** die sich die Antenne (32) in magnetisch gekoppeltem, nicht in Kontakt kommendem und mechanisch entkoppeltem Verhältnis mit dem kreisringförmigen Körper (82) erstreckt.

2. Der Apparat gemäß Anspruch 1, wobei ein aus einem nichtleitenden Material gebildeter Trägerstreifen (36) die Antenne (32) und den Transponder (34) zumindest teilweise einkapselt, um die Antenne (32) in einer vorgeschriebenen Ausrichtung in Bezug auf den Transponder (34) zu halten.

3. Der Apparat gemäß Anspruch 2, wobei der Trägerstreifen (36) im Wesentlichen die Gesamtheit der Antenne (32) einkapselt.

4. Der Apparat gemäß Anspruch 2 oder 3, der weiterhin den kreisringförmigen Körper (82) und den Transponder (34) umfasst, die sich in einem gemeinsamen Gehäuse (52) befinden, und wobei der Trägerstreifen (36) eine bevorzugte Ausrichtung des Gehäuses (52) in Bezug zu der Antenne (32) aufrechterhält.

5. Der Apparat gemäß einem der vorgenannten Ansprüche 2 bis 4, wobei der Trägerstreifen (36) den Apparat (10) zu einer einstückigen Baugruppe macht.

6. Der Apparat gemäß einem der vorgenannten Ansprüche, wobei der Apparat (10) einen ringförmigen unteren Seitenwandbereich eines komplementär dimensionierten Reifens (12) enthält.

7. Der Apparat gemäß Anspruch 6, wobei der Reifen (12) an einer Radfelge (26) montiert wird und der untere Seitenwandbereich des Reifens (12) sich in einer abgegrenzten ringförmigen Fläche befindet, die zwischen 10 und 30 Millimeter über der Oberseite der Radfelge (26) liegt.

8. Der Apparat gemäß Anspruch 1, wobei die Schleifenantenne (32) in einer ersten Ebene liegt, die lotrecht zur durchgehenden Öffnung (88) des kreisringförmigen Körpers angeordnet ist.

9. Der Apparat gemäß Anspruch 1 oder 8, wobei die Schleifenantenne (32) in direktem magnetisch gekoppeltem Verhältnis und mechanisch entkoppeltem Verhältnis zu dem kreisringförmigen Körper (82) ist.

10. Der Apparat gemäß Anspruch 1, wobei die Antenne (32) sich in der durchgehenden Öffnung (88) befindet und sich im wesentlichen koaxial dazu erstreckt, in mechanisch entkoppeltem Verhältnis zu dem kreisringförmigen Körper (82).

11. Der Apparat gemäß Anspruch 10, wobei die Antenne (32) zumindest teilweise in ein im Wesentlichen nichtleitendes Einkapselmaterial eingebettet ist.

12. Der Apparat gemäß Anspruch 10 oder 11, wobei die Antenne (32), der Transponder (34) und der kreisringförmige Körper (82) durch das Einkapselmaterial einstückig transportierbar gemacht werden.

13. Ein Verfahren zum Montieren eines Apparats gemäß Anspruch 1 an einem Reifen (12), wobei das Verfahren die Schritte umfasst des Vorsehens einer ringförmigen Antenne (32), Koppelns eines Transponders (34) an die ringförmige Antenne (32), Einkapselns zumindest eines Teils der Antenne (32) und des Transponders (34) in einem Trägerstreifen (36) aus nichtleitendem Material, um eine Ringbaugruppe (10) zu erzeugen, und Befestigens der Ringbaugruppe (10) an einem Seitenwandbereich des Reifens (12).

14. Das Verfahren gemäß Anspruch 13, das weiter den Schritt umfasst des Dimensionierens der Ringbaugruppe (10) mit der Antenne (32), sodass sie eine begrenzte ringförmige Oberfläche zwischen zehn und dreißig Millimeter über einer Oberseite einer Radfelge (26), an der der Reifen (12) montiert wird, überlappt.

## Revendications

1. Appareil comprenant un transpondeur (34) et une antenne cadre (32) couplée au transpondeur (34), **caractérisé par** un corps toroïdal (82), composé d'un matériau possédant une perméabilité électromagnétique élevée, couplé au transpondeur (34) et à l'antenne (32), le corps toroïdal (82) possédant un alésage débouchant (88) à travers lequel s'étend l'antenne (32) dans une relation de couplage magnétique et de découplage mécanique en l'absence de contact avec le corps toroïdal (82).

2. Appareil selon la revendication 1, dans lequel l'antenne (32) est encapsulée au moins en partie dans une bande de support (36) constituée d'un matériau non conducteur, bande dans laquelle est également encapsulé le transpondeur (34) pour maintenir l'antenne (32) dans une orientation prescrite par rapport au transpondeur (34).

3. Appareil selon la revendication 2, dans lequel la totalité de l'antenne (32) est essentiellement encapsulée dans la bande de support (36).

4. Appareil selon la revendication 2 ou 3, comprenant en outre le fait que le corps toroïdal (82) et le transpondeur (34) sont logés dans un boîtier commun (52) et le fait que la bande de support (36) maintient une orientation préférée du boîtier (52) par rapport à l'antenne (32).

5. Appareil selon l'une quelconque des revendications précédentes 2 à 4, dans lequel la bande de support (36) fait en sorte que l'appareil (10) représente un assemblage unitaire.

6. Appareil selon l'une quelconque des revendications précédentes, dans lequel l'appareil (10) englobe une région de flanc inférieur annulaire d'un bandage pneumatique (12) de dimension complémentaire.

7. Appareil selon la revendication 6, dans lequel le bandage pneumatique (12) est monté sur une jante de roue (26) et la région de flanc inférieur du bandage pneumatique (12) est confinée au sein d'une surface annulaire délimitée disposée à une distance s'étendant entre 10 et 30 mm au-dessus de la surface de la jante de roue (26).

8. Appareil selon la revendication 1, dans lequel l'antenne cadre (32) se trouve dans un premier plan disposé en position perpendiculaire par rapport à l'alésage débouchant (88) du corps toroïdal.

9. Appareil selon la revendication 1 ou 8, dans lequel l'antenne cadre (32) est mise en relation de couplage magnétique direct et en relation de découplage mécanique avec le corps toroïdal (82).

10. Appareil selon la revendication 1, dans lequel l'antenne (32) est logée dans l'alésage débouchant (88) et s'étend essentiellement en direction coaxiale avec ce dernier, en relation de découplage mécanique avec le corps toroïdal (82).

11. Appareil selon la revendication 10, dans lequel l'antenne (32) est enrobée au moins en partie dans une matière d'encapsulage essentiellement non conductrice.

12. Appareil selon la revendication 10 ou 11, dans lequel l'antenne (32), le transpondeur (34) et le corps toroïdal (82) peuvent être transportés en une seule pièce grâce à la matière d'encapsulage.

13. Procédé pour monter un appareil selon la revendication 1 sur un bandage pneumatique (12), le procédé comprenant les étapes consistant à procurer une antenne annulaire (32), à coupler un transpondeur (34) à l'antenne annulaire (32), à encapsuler au moins une partie de l'antenne (32) et du transpondeur (34) dans une bande de support (36) constituée d'un matériau non conducteur pour obtenir un assemblage annulaire (10), et fixer l'assemblage annulaire (10) à une région de flanc du bandage pneumatique (12).

14. Procédé selon la revendication 13, comprenant en outre l'étape consistant à dimensionner l'assemblage annulaire (10) avec l'antenne (32) pour qu'il chevauche une surface annulaire délimitée sur une distance entre 10 et 30 mm au-dessus de la surface supérieure d'une jante de roue (26) sur laquelle est monté le bandage pneumatique (12).
